# EUROPEAN PATENT APPLICATION

(11) **EP 2 145 723 A1**
(43) Date of publication of application: **20.01.2010**
(21) Application number: 09009013.5
(22) Date of filing: 10.07.2009
(51) Int. Cl.: B23Q 1/62, B23Q 5/40, B23B 3/00

(54) **A cross slide for a turning machine**

(30) Priority: 17.07.2008 IT MI20081299
(71) Applicant: Gildemeister Italiana S.p.A., 24030 Brembate Sopra (IT)
(72) Inventor: Rigolone, Franco, 24010 Ponteranica (IT); Persico, Enrico, 24022 Alzano Lombardo (IT); Gervasoni, Oscar, 24123 Bergamo (IT)
(74) Representative: Mayer, Hans Benno

(57) **Abstract**

A cross slide for a turning machine, wherein the displacements are made by a single guide and a single sliding block, in particular with a construction integral with the machine tool, supporting a first controllable motor, wherein the slide is driven by a ball recirculation screw and may slide along a single sliding guide integral with the turning machine, through a single sliding block, the movable construction supporting moreover a second controllable motor, and wherein by a ball recirculation screw a second movement of the slide is achieved, the slide supporting a tool holding rack and a screw driving scroll.

## Description

### BACKGROUND OF THE INVENTION

The present invention relates to a cross slide, in particular for a turning machine.

As is known, machine tools and, in particular turning machines, conventionally comprise cross slides supporting machining tools which, in the chip removing operations, are greatly stressed.

Prior cross slides drive the machining tools in two mutually perpendicular directions on sliding or rolling guides. Said guides have advantages but also disadvantages, thereby the machine tool maker must use either sliding or rolling guides for his turning machine, for example a single or multiple mandrel turning machine.

Moreover, if high machining precision and easy tool and workpiece setting properties as well as a simple cross slide construction are desired, rolling guides are generally selected, the cross slide being driven along two parallel single rail guide elements at a set distance from one another, coupled to the slide body and supporting each two or more sliding blocks allowing the slide body to be driven, for example, by a controllable driving motor, which usually controls the slide body through a ball recirculation screw, the slide body including a cooperating driving scroll driving the slide body and the cutting tools supported thereby.

The two sliding block supporting spaced rail guide elements occupy a high space. Moreover, the slide body, which must be properly sized, and the sliding blocks make the machine tool construction very complex, and very accurate sliding block and parallel guide adjusting operations are required.

The prior cross slide, furthermore, comprises on its slide body the above mentioned scroll-ball recirculating screw assembly, the screw of which is coupled to said control motor, thereby the cross slide has a very large constructional size.

### SUMMARY OF THE INVENTION

Accordingly, the main object of the present invention is to overcome the above mentioned drawbacks of the prior art, and provide a very compact cross slide for machine tools, in particular turning machines, which slide has a very high mechanical strength and a very simple construction, without slide body spaced supporting guides.

Another object of the present invention is to provide such an improved very compact construction cross slide for machining, with a small operating stroke and a very high machining precision, small diameter pieces.

A machine tool including a cross slide according to the present invention allows to machine very high precision and rate workpieces having mechanical characteristics as good as those provided by tool machines including tool slides according to the status of the art.

Another object of the present invention is to provide a slide of low cost, made of elements adapted to be easily constructed, and having such a small size as not to jam the working region of a small diameter piece making tool machine.

According to the present invention an improved cross slide having a very simple construction and very high mechanical strength, precision, driving speed characteristics, like those of a conventional prior slide, is herein provided.

The inventive slide has moreover a slide body in which are built-in a tool holder rack and a scroll support assembly, each movement of the slide being achieved by a single rail element supporting the slide by a single sliding block.

The slide comprises a first slide body supporting a driving motor driving, through a ball recirculation screw, the slide in turn comprising a built-in driving scroll and a built-in tool holder rack.

The slide has a single sliding guide extending in a sliding block integral with the first body.

The first body comprises a second driving scroll engaged in a second ball recirculation screw, controlled by a further driving motor integral with the machine tool construction.

The first body comprises moreover a single sliding block sliding on a guide integral with the machine tool framework.

According to the present invention, the above mentioned objects are achieved by a cross slide for a turning machine, which slide comprises a first body, including a top arm supporting a first controllable motor driving, through a ball recirculating screw, a movable supporting element, including a plurality of tools, said movable supporting element including a guide supported by a sliding block which is integral with an extension of the first body, the first body being engaged by a ball recirculating screw of a second controllable motor, the first body supporting a further sliding block, which can be driven along a sliding guide integral with the turning machine framework.

### BRIEF DESCRIPTION OF THE DRAWINGS

The present invention will be disclosed in a more detailed manner hereinafter with reference to the accompanying drawings, where:
Figure 1 is a perspective view showing the cross slide according to the invention;
Figure 2 is a side view of the inventive cross slide;
Figure 3 is a front view of the inventive cross slide;
Figure 4 is a top plan view of the inventive cross slide; and
Figure 5 shows a detail of a body of a sliding block and related sliding support.

### DESCRIPTION OF THE PREFERRED EMBODIMENTS

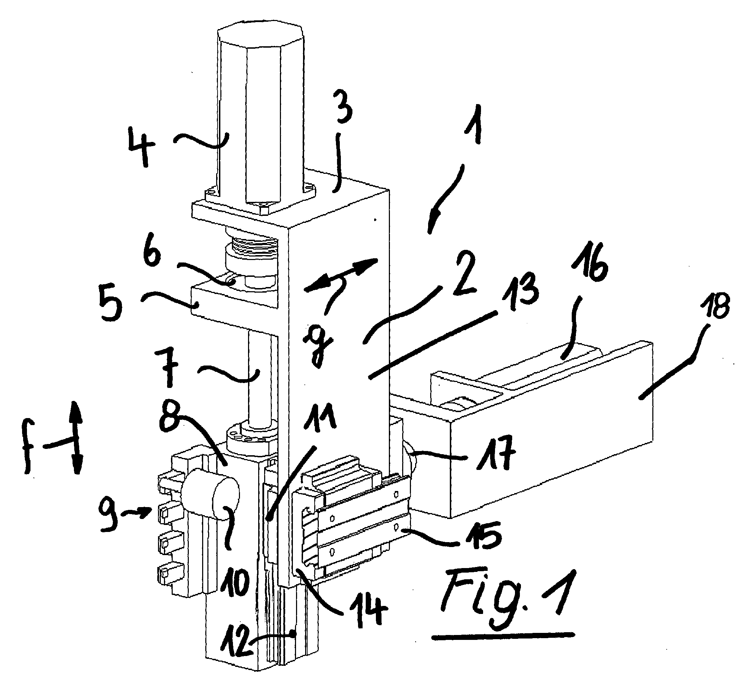

As shown in figure 1, the inventive cross slide, generally indicated by 1, comprises a supporting body 2.

The supporting body 2 comprises an end arm 3 thereon a driving controllable motor 4 is mounted.

The driving motor 4 is advantageously a motor which can be controlled by the NC unit of the machine (not shown).

A further arm 5, spaced from said arm 3, comprises a hole 6 therethrough a ball recirculating screw 7 driven by the motor 4 passes.

Within the hole 6 a ball recirculating screw supporting bearing is engaged.

The ball recirculating screw 7 extends toward the slide 8, including an inner threaded scroll, therewith said ball recirculating screw 7 is engaged.

Between the bearing and support arm 3 is advantageously arranged a per se known driving resilient coupling, connecting the motor 4 to the ball recirculating screw 7.

The body of the slide supports a rack for holding a plurality of cutting tools 9 for controllably machining a workpiece 10.

On a side thereof facing the extension of the supporting body 2, the slide 8 body comprises a sliding block 11 sliding on a sliding guide 12.

The side 13 of the supporting body 2 facing the machine tool is integral with a further sliding block 14 sliding on a single-piece sliding guide 15, which is affixed to the machine tool framework.

A further supporting body 18, integral with said machine tool, supports a second controllable motor 16, the shaft 17 of which is operatively coupled to said supporting body 2.

As shown, the sliding block 11 and guide 12 are arranged at 90° with respect to the sliding block 14 and guide 15.

Thus, by controllably driving the motor 4, the machining tools can be in turn driven in the direction indicated by the double arrow (f), whereas, by controllably driving the motor 16, the overall supporting body 2 can be controllably driven in the direction indicated by the double arrow (g), thereby the machining tools 9 may also be driven in the direction of the arrow (g).

The movements in the directions (f) and (g) are mutually related, since the driving motors 14 and 16 are controllably driven by the machine tool NC control.

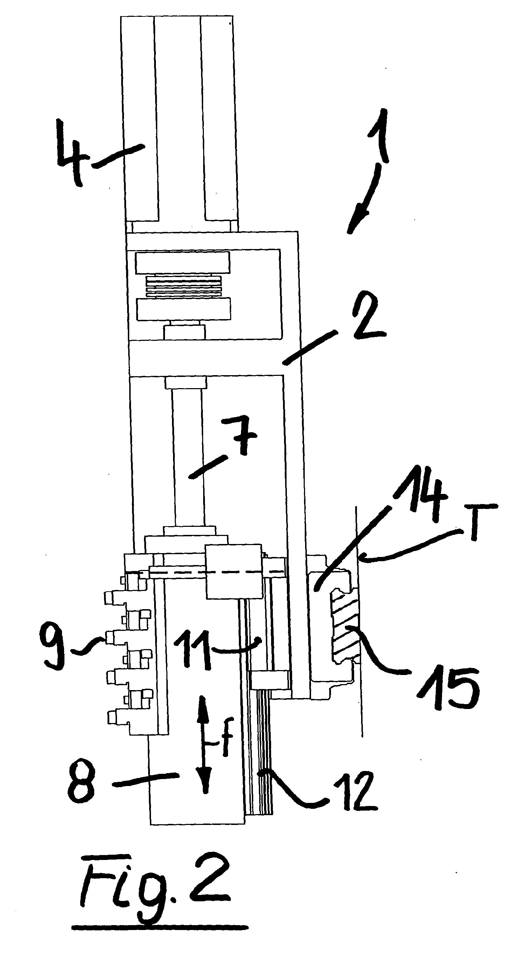

Figure 2 is a side view showing the cross slide generally indicated by 1.

It is possible to clearly see in this view the driving motor 4, the supporting body 2, the driving motor 4 ball recirculating screw 7, the slide 8 supporting the machining tools 9, the vertical guide 12, and the controllably driven sliding blocks 11 sliding in the direction of the arrow (f).

Moreover, figure 2 also shows the sliding block 14 allowing the supporting body 2 to be driven along the sliding guide 15, which is integral with the machine tool framework T.

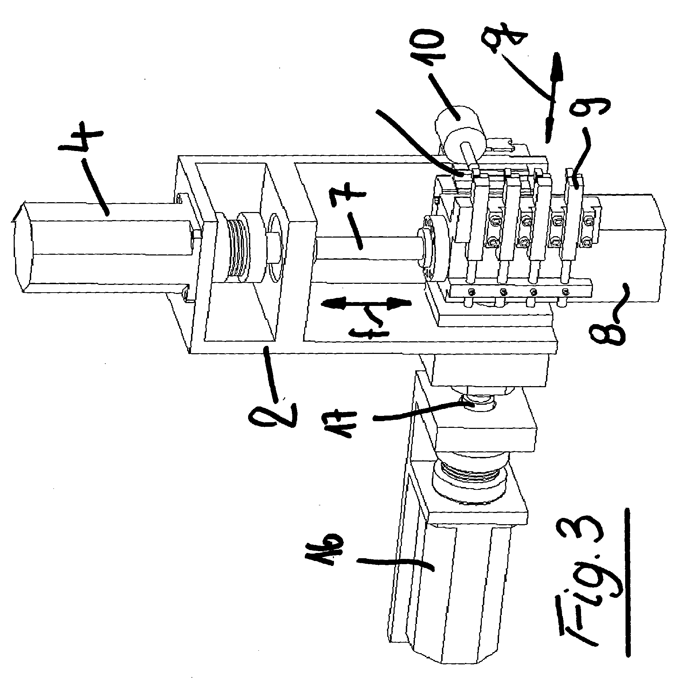

Figure 3 shows, in turn, the supporting body 2 with the motor 4, the ball recirculating screw 7, the machining tool 9 assembly and a workpiece 10.

Thus, by driving, by the controllable motor 4, the ball recirculating screw 7, the machining tool 9 supporting slide 8 can be driven, as shown in figure 3 by the double arrow (f), and, by the controllable motor 16 and ball recirculating screw 17, the said tools 9 can be simultaneously controllably driven as shown by the double arrow (g).

Accordingly, the machining tools 9 can be controllably driven, in a mutually related manner, along the two axes (f) and (g).

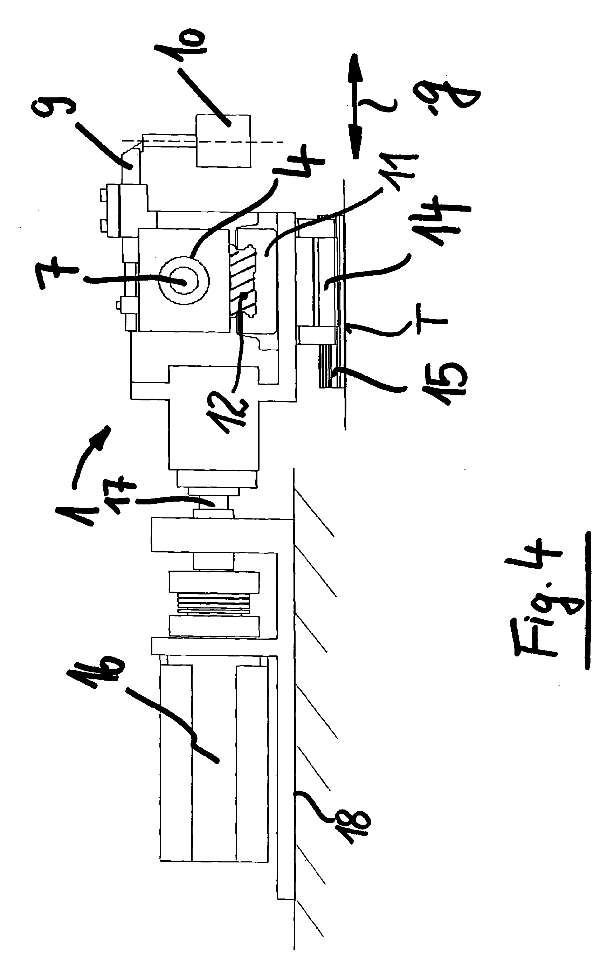

Figure 4 is a top plan view showing the device 1.

More specifically, this figure clearly shows the workpiece 10 which is machined by a machining tool 9 and further schematically shows the ball recirculating screw driven by the motor 4, for driving said tools 9 in a plane (f) perpendicular to the drawing sheet.

Figure 4 also shows the sliding block applying a translation movement to the device or assembly 1 through the sliding guide 15 integral with the turning machine framework, and shows moreover that the driving motor 16 controllably drives the ball recirculating screw to in turn drive the machining tools supporting assembly in the direction of the double arrow (g) through the guide 15 and sliding block 14.

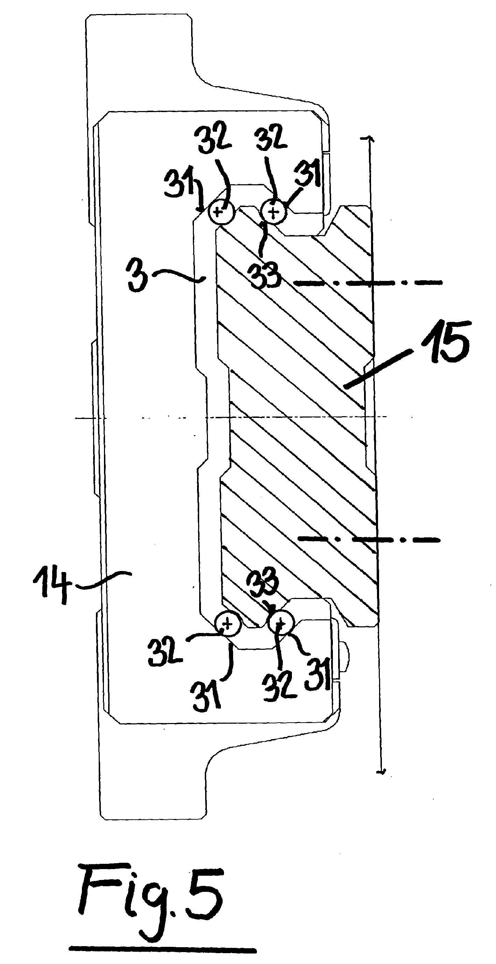

Figure 5 is a cross sectional view showing, by way of an example, the sliding block 14 supporting said guides 15.

From the above disclosure and accompanying drawings, it should be apparent that the very constructionally simple and compact cross slide 1 according to the present invention can be easily and quickly assembled on a turning machine even in a small mounting space.

In particular, as is shown in figure 5, the sliding block 14 has an inner cavity 30 defined by inclined flat surfaces 31 operating as sliding surfaces for ball elements 32 sliding in semicircular guides 33 defined in the guide 15 body.

## Claims

1. A cross slide (1) for a turning machine, **characterized in that** said slide (1) comprises a first slide body (2), including a top body (2) and an arm (3) supporting a first driving controllable motor (4) driving, through a ball recirculating screw (7), a movable slide (8) and including a plurality of tools (9), that said slide (8) comprises a sliding block (11) sliding on a further slide (12) integral with an extension of said first body (2), that the body (2) is engaged by a ball recirculating screw (17) of a second driving controllable motor (16) and that said body (2) comprises a further sliding block (14) sliding along a sliding guide (15) integral with the turning machine framework.

2. A cross slide for a turning machine, according to claim 1, **characterized in that** said cross slide comprises a supporting body (2) having an end arm (3) supporting said first driving motor (4), that a further arm (5) spaced from said arm (3) is provided, and that said further arm (5) comprises a hole (6) therethrough said ball recirculating screw (7) driven by said first driving motor (4) passes.

3. A cross slide for a turning machine, according to claim 2, **characterized in that** said hole (6) houses a bearing for supporting said ball recirculating screw (7).

4. A cross slide for a turning machine, according to claim 1, **characterized in that** said further sliding block (14) has a hollow cavity (30) delimited by inclined flat surfaces (31), and that said surfaces (31) operate as sliding surfaces for balls (32) sliding in semicircular guides (33) formed in the body of said guide (15).
